# EUROPÄISCHE PATENTSCHRIFT

(11) **EP 2 212 224 B1**
(45) Veröffentlichungstag und Bekanntmachung des Hinweises auf die Patenterteilung: **20.06.2012**
(21) Anmeldenummer: 08801305.7
(22) Anmeldetag: 10.09.2008
(51) Int. Cl.: B65G 45/16

(54) **VORRICHTUNG ZUM ABSTREIFEN VON VERUNREINIGUNGEN EINES GURTBANDES VON FÖRDERBANDANLAGEN**
DEVICE FOR STRIPPING IMPURITIES FROM A BELT OF CONVEYOR BELT SYSTEMS
DISPOSITIF DE RACLAGE PERMETTANT D'ÉLIMINER L'ENCRASSEMENT D'UNE BANDE DANS DES INSTALLATIONS À BANDES TRANSPORTEUSES

(30) Priorität: 10.09.2007 DE 102007042653
(43) Veröffentlichungstag der Anmeldung: 04.08.2010
(73) Patentinhaber: HOSCH-Fördertechnik GmbH, 45659 Recklinghausen (DE)
(72) Erfinder: SCHWARZE, Hans-Otto, 45665 Recklinghausen (DE)
(74) Vertreter: Bausch, Thomas
(86) Internationale Anmeldenummer: PCT/DE2008/001500
(87) Internationale Veröffentlichungsnummer: WO 2009/033463

(56) Entgegenhaltungen:
- GB-A- 2 165 200

## Beschreibung

Die Erfindung betrifft eine Vorrichtung zum Abstreifen von Verunreinigungen eines Gurtbandes von Förderbandanlagen nach dem Oberbegriff des Anspruchs 1.

Förderbänder, bei denen Abstreifer zum Einsatz kommen, werden großtechnisch für die Förderung von Abraum, Kohle, Erze, Erdaushub und dergleichen verwendet und laufen auf Rollen im Endlosbetrieb um. Normalerweise wird das Fördergut auf der einen Seite des Förderbandes aufgegeben und fällt an den Umlenkstationen an der anderen Seite des Förderbandes vom Förderband ab und das Förderband läuft auf der Unterseite des Fördersystems leer zurück. Manchmal backen aber Teile des geförderten Gutes auf dem Förderband an oder verkleben damit. Solche Anbackungen sollen durch die Abstreifer entfernt werden, wobei die Abstreifer am ebenen Teil oder im Umlenkteil des Förderbandes hierzu angeordnet sein können.

Allerdings weisen die Förderbänder auch Unebenheiten und Unregelmäßigkeiten auf, z.B. an den Stellen, an denen das Endlosförderband zusammengefügt ist. Die Abstreifer dürfen solche Stellen im Förderband keinesfalls beschädigen. Für die Abstreifer besteht daher die Notwendigkeit, auf festsitzende Verschmutzungen des Förderbandes in anderer Weise zu reagieren als auf Unregelmäßigkeiten des Förderbandes selbst. Diese Unterscheidung stellt die in der Regel rein mechanisch ausgeführten Abstreifersysteme vor erhebliche Probleme, was zu einer Vielzahl von verschiedensten Konstruktionen geführt hat.

EP 1 529 010 B1 zeigt eine Vorrichtung zum Abstreifen von Verunreinigungen eines Gurtbandes von Förderanlagen, die eine an einem Systemträger um eine erste Achse schwenkbar angeordnete Lamellenstütze aufweist und im Umlenkteil des Förderbandes angeordnet ist. An der Lamellenstütze ist eine Abstreiflamelle drehbar um eine zweite Achse vorgesehen, wobei die Abstreiflamelle einen ersten Arm und einen zweiten Arm aufweist, die sich von der zweiten Achse diametral erstrecken. Der erste Arm erstreckt sich in Richtung des Gurtbandes und weist eine Abstreifkante auf, die an einem Gurtband schälend anliegt. Der zweite Arm der Abstreiflamelle ist auf der dem Gurtband abgewandten Seite der Abstreiflamelle vorgesehen. Durch die erste Achse ist ein erstes Drehgelenk für die Lamellenstütze bezüglich des Systemträgers gegeben, wobei dem Drehgelenk eine erste Federvorrichtung zugeordnet ist, die ein Federelement aufweist, das die Abstreiflamelle in Richtung des Gurtbandes vorspannt, so dass die Abstreiflamelle in einer Abstreifposition mit dem ersten Arm an dem Gurtband anliegt und Verunreinigungen von dem Gurtband abschält. Durch die zweite Achse ist ein zweites Drehgelenk für die Abstreiflamelle bezüglich der Lamellenstütze gegeben, wobei dem zweiten Drehgelenk eine zweite Federvorrichtung zugeordnet ist, die ein zweites Federelement aufweist. Die Richtung der Federkraft der zweiten Federvorrichtung ist im Bezug auf die Richtung der Federkraft der ersten Federvorrichtung gegensinnig orientiert. Durch das zweite Federelement wird die Abstreiflamelle in der gewünschten Abstreifposition mit schälender Anstellung am Gurtband gehalten. Sollte nun ein größeres Hindernis am Gurtband auf die Abstreiflamelle auftreffen, so wird die Abstreiflamelle aufgrund der durch die beiden Federelemente vorgespannten beiden Drehgelenke von dem Gurtband gelöst.

Die DE 34 02 407 A1 zeigt eine weitere Vorrichtung zum Abstreifen von Verunreinigungen eines Gurtbandes von Förderanlagen, welches am unteren, zurücklaufenden Trum des Gurtbandes ansetzt. Diese Vorrichtung weist einen an einer Traverse um eine erste Achse schwenkbar angeordneten Lenker und ein um eine zweite Achse schwenkbar angeordnetes Abstreiferelement auf, welches einen dem Gurt zugewandten ersten Arm und einem dem Gurt abgewandten zweiten Arm aufweist, ferner eine der ersten Achse zugeordnete Feder, die ein Abstreiferelement in Richtung des Gurtes vorspannt, so dass das Abstreiferelement in einer Abstreifposition an dem Gurt anliegt. Weiterhin ist am zweiten Arm des Abstreiferelements ein Lenker angeordnet, der das Abstreiferelement mit der Feder koppelt. Die GB 2 165 200 A zeigt eine Vorrichtung zum Abstreifen von Verunreinigungen eines Gurtbandes von Förderbandanlagen nach dem Oberbegriff des Anspruchs 1.

Nachteilig bei dieser Art von Abstreifern ist die Tatsache, dass deren Aufbau aufgrund der großen Anzahl von Einzelteilen komplex und aufwendig ist. Um eine optimale Anlage der Abstreiflamelle an dem Gurtband zu erreichen, um kleine Verunreinigungen zu entfernen, und gleichzeitig jedoch zu erreichen, dass die Abstreiflamelle bei großen Hindernissen diesen mittels Zurückschwenken ausweicht, muss die Federkraft der beiden Federelemente, die an den beiden Drehgelenken angeordnet sind, genau aufeinander abgestimmt werden, so dass eine entsprechende Abschälung an dem Gurtband erfolgen kann.

Ein weiteres Problem entsteht nach dem Zurückschwenken von federnd gelagerten Abstreifern, wenn diese wieder in die Ausgangslage gebracht werden sollen. Einerseits darf der Vorgang nicht zu lange dauern, andererseits darf die Abstreiflamelle nicht mit zu großer Geschwindigkeit auf das Gurtband schlagen, um dieses nicht durch Hacken zu beschädigen. Praktisch heißt das, dass einerseits nur große Kräfte zum Zurückschwenken führen dürfen, die zum Gegenhalten erforderliche Federkraft aber beim anschließenden Heranschwenken keine großen Impulse auf das Gurtband leiten darf. Entsprechende Dämpfungen sollen das Heranführen aber möglichst nicht verlangsamen. Diese Anforderungen widersprechen sich zunächst grundsätzlich.

Es ist die Aufgabe der Erfindung, eine Vorrichtung zum Abstreifen von Verunreinigungen von Gurtbändern anzugeben, bei der Verunreinigungen sicher und zuverlässig abgeschält werden, und die bei großen Hindernissen an dem Gurtband von diesem verschwenkt und schnell und sicher wieder heran geschwenkt wird, wobei gleichzeitig deren Aufbau vereinfacht ist.

Diese Aufgabe wird erfindungsgemäß mit den kennzeichnenden Merkmalen des Anspruchs 1 durch eine Vorrichtung zum Abstreifen von Verunreinigungen eines Gurtbandes an Förderbandanlagen gelöst, umfassend
■ wenigstens eine an einem Systemträger um eine erste Achse schwenkbar angeordnete Lamellenstütze,
■ wenigstens eine an der Lamellenstütze um eine zweite Achse schwenkbar angeordnete Abstreiflamelle, die einen dem Gurtband zugewandten ersten Arm und einen dem Gurtband abgewandten zweiten Arm aufweist, und
■ wenigstens eine der ersten Achse zugeordnete Federeinrichtung mit wenigstens einem Federelement, das die Abstreiflamelle in Richtung des Gurtbandes vorspannt, so dass die Abstreiflamelle in einer Abstreifposition mit dem ersten Arm an dem Gurtband anliegt,
• wenigstens ein Koppelungselement an einem von dem ersten Arm und dem zweiten Arm der Abstreiflamelle angeordnet ist, das die Abstreiflamelle mit der Federeinrichtung koppelt, wobei
■ der Anlenkpunkt des Koppelungselementes an der Federeinrichtung über einen Vorsprung erfolgt, der drehbar um Achse ist, welche gleichzeitig Achse der Lamellenstütze ist, .
■ das Koppelungselement um eine Achse schwenkbar an der Abstreiflamelle angeordnet ist,
■ die Federeinrichtung sowohl mit dem Systemträger als auch mit der Lamellenstütze als auch mit dem Kopplungselement am Drehgelenk verbunden ist, und
■ die Lamellenstütze über die Federeinrichtung an das Gurtband gedrückt wird.

Um sicher zu stellen, dass Verunreinigungen an dem Gurtband der Förderbandanlage sicher und zuverlässig abgeschält werden, muss die Abstreiflamelle entsprechend schälend an dem Gurtband anliegen, wobei die Andrückkraft der Abstreiflamelle weder zu groß sein darf, um Beschädigungen des Gurtbandes zu vermeiden, noch zu klein sein darf, um die Verunreinigungen zu entfernen. Durch die erste Achse ist zwischen dem Systemträger und der Lamellenstütze ein erstes Drehgelenk gegeben, das durch das Federelement der Federeinrichtung vorgespannt ist, um die Abstreiflamelle an dem Gurtband zur Anlage zu bringen und zu halten.

Es ist erfindungsgemäß vorgesehen, dass an dem zweiten Arm der Abstreiflamelle wenigstens ein Koppelungselement angeordnet ist, das die Abstreiflamelle mit der an der ersten Achse angeordneten Federeinrichtung koppelt. Da die Abstreiflamelle um ein zweites Drehgelenk, das durch die zweite Achse gegeben ist, schwenkbar ist, wird durch das Koppelungselement eine Kraft von der Federeinrichtung auf die Abstreiflamelle übertragen, so dass auch die Abstreiflamelle durch das an der ersten Achse angeordnete Federelement vorgespannt ist. Dadurch wird zum einem sichergestellt, dass die Abstreiflamelle an dem Gurtband anliegt und kleine Verunreinigungen von dem Gurtband abschält. Zum anderen wird dadurch erreicht, dass die Abstreiflamelle beim Auftreten von großen Hindernissen von dem Gurtband gelöst wird. Beim Lösen der Abstreiflamelle von dem Gurtband trifft das Hindernis zunächst auf den ersten Arm der Abstreiflamelle und verschwenkt diesen entgegen der Federkraft des Federelements, welche durch das Koppelungselement auf die Abstreiflamelle wirkt. Gleichzeitig wird die Lamellenstütze entgegen der gleichen Federkraft des Federelements von dem Gurtband weg geschwenkt.

Die Schwenkbewegung der Abstreiflamelle um das zweite Drehgelenk wird von der Schwenkbewegung der Lamellenstütze um das erste Drehgelenk überlagert. Durch das Vorsehen einer Koppelung dieser beiden Schwenkbewegungen aufgrund der Koppelung der Abstreiflamelle mit dem Federelement durch das Koppelungselement wird eine gleichmäßige Schwenkbewegung erreicht, die die Abstreiflamelle zuverlässig von dem Gurtband löst, sodass diese von den Hindernissen nicht beschädigt wird. Ferner wird dadurch erreicht, dass die Abstreiflamelle schnell und sicher wieder an das Gurtband zurückverschwenkt wird, ohne dass das Gurtband beschädigt wird, und die Verunreinigungen gelöst werden.

Überdies bietet das Koppelungselement den Vorteil, dass der Aufbau der Vorrichtung zum Abstreifen derart vereinfacht, dass an dem zweiten Drehgelenk, um das die Abstreiflamelle bezüglich der Lamellenstütze schwenkbar ist, eine weitere Federeinrichtung vermieden ist.

Durch die Ausrichtung des Koppelungselements bezüglich der Federeinrichtung und der Abstreiflamelle, das heißt, in welchem Winkel das Koppelungselement an der Abstreiflamelle und der Federeinrichtung angeordnet ist, bestimmt sich die Übertragung der Federkraft von dem Federelement der Federeinrichtung auf die Abstreiflamelle. Um sicher zu stellen, dass die Federkraft während der gesamten Schwenkbewegung der Lamellenstütze und der Abstreiflamelle durch das Koppelungselement auf die Abstreiflamelle übertragen wird, ist das Kopplungselement vorteilhaft um eine Achse schwenkbar an der Abstreiflamelle angeordnet, so dass das Kopplungselement beim Verschwenken der Abstreiflamelle und der Lamellenstütze die zwischen der Federeinrichtung und der Abstreiflamelle durch die Verschwenkung gewünschte Ausrichtung zur Kraftübertragung hat.

Es ist zweckmäßig vorgesehen, dass das Koppelungselement auch an der Federeinrichtung schwenkbar angeordnet ist.

In einer bevorzugten Ausgestaltung ist das Koppelungselement als eine Koppelstange vorgesehen, wodurch der Aufbau der Vorrichtung weiter vereinfacht wird.

Es versteht sich, dass das Koppelungselement auch als Druck- oder Zugstange vorgesehen sein, um die Federkraft des Federelements zu unterstützen oder abzuschwächen, je nach Vorgabe. So kann das Koppelungselement zum Beispiel als Zug- oder Hydraulikfeder ausgebildet sein. Ferner kann vorgesehen sein, dass das Koppelungselement als ein Seil ausgebildet ist.

In einer weiteren bevorzugten Ausgestaltung weist die Federvorrichtung ein Gehäuse auf, in dem das eine Federelement der Federrichtung angeordnet ist. Dadurch wird erreicht, dass das Federelement von äußeren Einflüssen abgeschirmt ist, sodass eine Verunreinigung des Federelementes und eine damit verbundene Funktionsanfälligkeit vorteilhaft vermieden ist.

Das Gehäuse weist vorteilhaft ein erstes Gehäuseteil und ein zweites Gehäuseteil auf, wobei das erste Gehäuseteil dem Systemträger und das zweite Gehäuseteil der Lamellenstütze zugeordnet ist. Das erste Gehäuseteil ist dabei zweckmäßig mit dem Systemträger fest verbunden, so dass das erste Gehäuseteil nicht um die erste Achse schwenkbar ist. Das zweite Gehäuseteil ist hingegen derart der Lamellenstütze zugeordnet, dass das zweite Gehäuseteil um die erste Achse verschenkbar ist. Dementsprechend ist das erste Gehäuseteil gegenüber dem zweiten Gehäuseteil drehbar an der Achse angeordnet.

Die beiden Gehäuseteile werden zweckmäßig durch das Federelement der Federeinrichtung gegeneinander vorgespannt. Das Federelement der Federeinrichtung ist vorteilhaft als Spiralfeder vorgesehen, wobei die Spiralfeder ein erstes Ende aufweist, das mit dem ersten Gehäuseteil verbunden ist und ein zweites Ende aufweist, das mit dem zweiten Gehäuseteil verbunden ist. Dadurch ist das erste Gehäuseteil bezüglich des zweiten Gehäuseteils vorgespannt, so dass eine Vorspannung für die Lamellenstütze bezüglich des Systemträgers erreicht wird. Es versteht sich, dass das Federelement auch durch jede andere Art von Feder gegeben sein kann, wie zum Beispiel eine Gummidrehfeder oder ähnliches.

In einer weiteren vorteilhaften Ausgestaltung ist das Koppelungselement an dem zweiten Arm der Abstreiflamelle angeordnet, d.h. an der dem Gurtband abgewandten Seite der Abstreiflamelle. Die beiden Arme werden hierbei durch die zweite Achse bzw. durch das durch die zweite Achse definierte Drehgelenkt getrennt. Das bedeutet, wenn das Koppelungselement an der dem Gurtband abgewandten zweiten Arm angeordnet ist, dass das Koppelungselement an der Seite der Abstreiflamelle angeordnet ist, die bezüglich der zweiten Achse dem Gurtband abgewandt ist.

Bei der Anordnung des Koppelungselements an der Abstreiflamelle und der Federeinrichtung ist zu beachten, dass für die Abstreiflamelle eine Vorspannung um das zweite Drehgelenkt erreicht wird, die entgegengesetzt beziehungsweise gegensinnig im Bezug auf die Vorspannung durch das Federelement für die Lamellenstütze bezüglich des Systemträgers um das erste Drehgelenk ist. Um eine gegensinnige Vorspannung für das erste Drehgelenk und das zweite Drehgelenk durch ein Federelement zu erreichen, ist die Gerade zu beachten, die die erste und die zweite Achse bzw. die beiden Drehgelenke miteinander verbindet. Ist das Koppelungselement zum Beispiel links von der verbindenden Geraden an der Federeinrichtung angeordnet, zum Beispiel an einem Vorsprung an dem bezüglich der ersten Achse drehbaren zweiten Gehäuseteil, wird durch das Federelement eine Vorspannung für das erste Drehgelenk im Uhrzeigersinn erreicht. Um nun eine gegensinnig orientierte Vorspannung für das zweite Drehgelenk zu erreichen, muss das Koppelungselement an dem zweiten Arm der Abstreiflamelle angeordnet sein, d.h. auf der rechten Seite der verbindenden Geraden. Das Kopplungselement und die verbindende Gerade müssen sich kreuzen.

In einer weiteren vorteilhaften Ausgestaltung umfasst die Federeinrichtung ein zweites Federelement. Durch das Vorsehen eines zweiten Federelementes, das ebenfalls dem ersten Drehgelenk, d.h. der ersten Achse zwischen Systemträger und Lamellenstütze, zugeordnet ist, wird erreicht, dass das erste Federelement über das Koppelungselement die Vorspannung um das zweite Drehgelenkt für die Abstreiflamelle und das zweite Federelement die Vorspannung um das erste Drehgelenk für die Lamellenstütze bewirkt. Die beiden Federwirkungen der beiden Federelemente sind gleichsinnig vorgesehen.

An dem zweiten Arm der Abstreiflamelle ist zweckmäßig ein Anschlag vorgesehen, wobei der Anschlag in der Abstreifposition der Vorrichtung zum Abstreifen der Verunreinigungen an der Lamellenstütze anliegt. Der Anschlag wird mittels des Koppelungselementes an der Lamellenstütze gehalten. Durch das Anliegen des Anschlags an der Lamellenstütze wird erreicht, dass durch die Koppelung der Federeinrichtung mit dem zweiten Arm der Abstreiflamelle durch den Anschlag eine Kraft auf die Lamellenstütze übertragen wird, sodass die Lamellenstütze in Richtung des Gurtbands weiter sicher gehalten wird und somit die Abstreiflamelle weiter sicher und zuverlässig an dem Gurtband anliegt und Verunreinigungen entfernt werden.

Zudem wird durch den Anschlag erreicht, dass die Abstreiflamelle beim Zurückschwenken nach dem Ausweichen von großen Hindernisse, frühzeitig, d.h. bevor die Abstreiflamelle wieder an dem Gurtband anliegt, mittels des Anschlags an der Lamellenstütze anliegt, sodass die Abstreiflamelle eine Ausrichtung aufweist, in der die Abstreiflamelle beim Auftreffen an dem Gurtband dieses nicht beschädigt.

Der Anschlag ist zweckmäßig aus einem elastischen Material vorgesehen, wodurch erreicht ist, dass beim Zurückschwenken der Abstreiflamelle durch den Anschlag das Auftreffen der Abstreiflamelle an der Lamellenstütze gedämpft wird. Der Anschlag ist herbei zum Beispiel aus einem Gummi oder einem Kunststoff zur Schlagdämpfung gegeben.

Weitere Vorteile ergeben sich aus den abhängigen Ansprüchen sowie aus der nachfolgenden Beschreibung.

Die Erfindung wird nachstehend anhand zweier bevorzugter Ausführungsbeispiele unter Bezugnahme auf die anliegenden Zeichnungen näher erläutert.
Fig. 1 zeigt eine Seitenansicht des ersten bevorzugten Ausführungsbeispiels einer erfindungsgemäßen Vorrichtung zum Abstreifen von Verunreinigungen von Gurtbändern.
Fig. 2 zeigt eine Vorderansicht eines ersten Ausführungsbeispiels aus Fig. 1.
Fig. 3 zeigt eine Vorderansicht eines zweiten Ausführungsbeispiels aus Fig. 1.

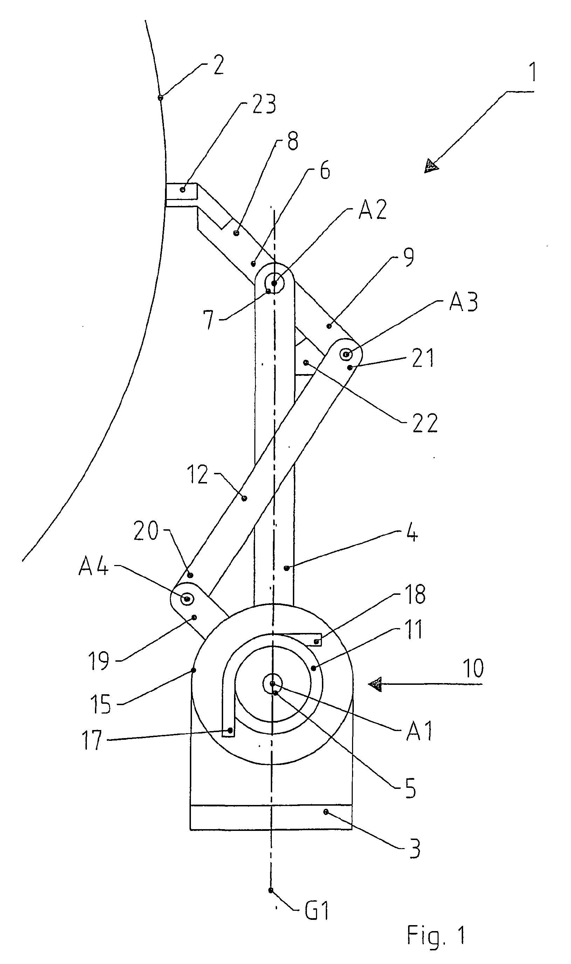

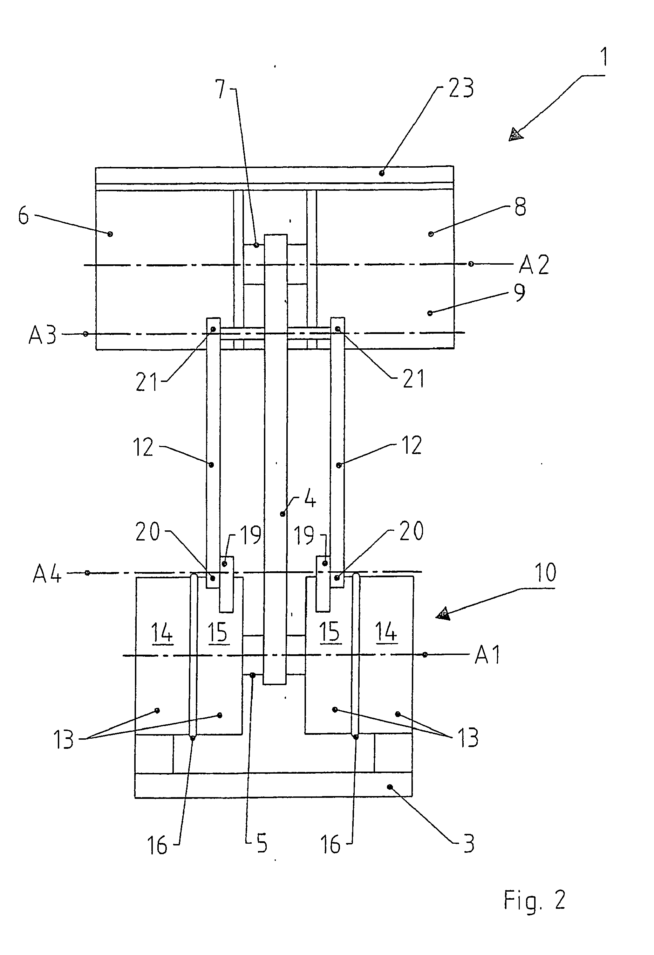

In Fig. 1 und Fig. 2 ist ein erstes bevorzugtes Ausführungsbeispiel einer erfindungsgemäßen Vorrichtung 1 zum Absteifen von Verunreinigungen eines Gurtbandes 2 von Förderbändern gezeigt, bei der ein Systemträger 3 vorgesehen ist, an dem eine Lamellenstütze 4 mit einem ersten Ende um eine erste Achse A1 schwenkbar angeordnet ist. Durch die schwenkbare Anordnung der Lamellenstütze 4 an dem Systemträger 3 ist ein erstes horizontales Drehgelenk 5 gegeben. An einem dem ersten Ende abgewandten zweiten Ende ist an der Lamellenstütze 4 eine Abstreiflamelle 6 um eine zweite Achse A2 schwenkbar angeordnet, wodurch ein zweites horizontales Drehgelenk 7 gegeben ist.

Die Abstreiflamelle 6 weist einen ersten Arm 8 und einen zweiten Arm 9 auf, wobei sich die beiden Arme 8 und 9 bezüglich des zweiten Drehgelenks 7 entgegengesetzt von dem zweiten Drehgelenk 7 weg erstrecken. Der erste Arm 8 erstreckt sich von der zweiten Achse A2 in Richtung des Gurtbandes 2, an dem der erste Arm 8 der Abstreiflamelle 6 anliegt. Der zweite Arm 9 erstreckt sich von dem Gurtband 2 weg.

Dem ersten Drehgelenk 5 an der ersten Achse A1 ist eine Federeinrichtung 10 mit einem Federelement 11 zugeordnet, das die Abstreiflamelle 6 entgegen des Gurtbandes 2 vorspannt. Die Federeinrichtung 10 ist über zwei Kopplungselemente 12 mit dem zweiten Arm 9 der Abstreiflamelle 6 gekoppelt.

Aus der in Fig. 2 gezeigten Vorderansicht geht hervor, dass die dort gezeigte Vorrichtung zum Abstreifen von Verunreinigungen bezüglich der Lamellenstütze 4 einen symmetrischen Aufbau aufweist, d.h. insbesondere, dass die Federeinrichtung zwei gleichgerichtete Federelemente 11 umfasst, wobei jedes der beiden Federelemente 11 über ein separates Koppelungselement 12 mit dem zweiten Arm 9 der Abstreiflamelle 6 gekoppelt ist. Die beiden Koppelungselemente 12 sind dabei jeweils auf einer Seite der Lamellenstütze 4 angeordnet, wobei die beiden Koppelungselemente 12 parallel zu einander vorgesehen sind. Die beiden Koppelungselemente 12 sind jeweils mit dem zweiten Arm 9 der Abstreiflamelle 6 schwenkbar um eine dritte Achse A3 verbunden. In der weiteren Erläuterung wird lediglich auf die Ausgestaltung der Federeinrichtung auf der einen Seite der Lamellenstütze 4 näher eingegangen, da beide Seiten baugleich vorgesehen sind.

Die Federeinrichtung 10 umfasst ein Gehäuse 13, das einen kreisrunden Querschnitt aufweist. Das Gehäuse 13 umfasst ein erstes Gehäuseteil 14 und ein zweites Gehäuseteil 15, wobei das erste Gehäuseteil 14 an dem Systemträger 3 und das zweite Gehäuseteil 15 an der Lamellenstütze 4 angeordnet ist. Das erste Gehäuseteil 14 ist derart an dem Systemträger 3 angeordnet, das das erste Gehäuseteil 14 bezüglich der ersten Achse A1 unverdrehbar vorgesehen ist. Das zweite Gehäuseteil 15 ist hingegen der Lamellenstütze 4 derart zugeordnet, dass das zweite Gehäuseteil 15 wie diese schwenkbar um die erste Achse A1 vorgesehen ist. Dementsprechend sind das erste Gehäuseteil 14 und das zweite Gehäuseteil 15 verdrehbar zu einander angeordnet, wobei zwischen den beiden Gehäusen ein O-Ring 16 aus einem Kunststoff, zum Beispiel Gummi, angeordnet ist.

In dem Gehäuse 13 der Federeinrichtung 10 ist das Federelement 11 vorgesehen, wobei das Federelement 11 durch eine Spiralfeder gegeben ist. Ein erstes Ende 17 der Spiralfeder ist mit dem ersten Gehäuseteil 14 und ein zweites Ende 18 mit dem zweiten Gehäuseteil 15 verbunden, sodass das zweite Gehäuseteil 15 bezüglich des ersten Gehäuseteils 14 aufgrund der Federwirkung der Spiralfeder vorgespannt ist. Dadurch ist auch die Lamellenstütze 4 entsprechend mit einer Kraft beaufschlagt. Die Federkraft des Federelements 11 ist dabei gegen den Uhrzeigersinn orientiert, sodass die Lamellenstütze 4 ebenfalls im Uhrzeigersinn vorgespannt ist und die an der Lamellenstütze 4 angeordnete Abstreiflamelle 6 in Richtung des Gurtbandes 2 mit einer Kraft beaufschlagt ist.

An dem zweiten Gehäuseteil 15 ist ein Vorsprung 19 vorgesehen, der sich in Richtung des Gurtbandes 2 erstreckt. In der Abstreifposition, in der kleine Verunreinigungen von dem Gurtband entfernt werden, ist der Vorsprung bezüglich einer Gerade G1, die das erste Drehgelenk 5 und das zweite Drehgelenk 7 miteinander verbindet, auf der linken Seite vorgesehen, also auf der dem Gurtband 2 zugewandten Seite der verbindenden Geraden G1.

An dem Vorsprung 19 ist das Koppelungselement 12 um eine vierte Achse A4 schwenkbar angeordnet. Das Koppelungselement 12 ist als eine Koppelstange ausgebildet. Dementsprechend ist ein erstes Ende 20 des Koppelungselementes 12 bezüglich der verbindenden Geraden G1 auf der dem Gurtband 2 zugewandten Seite angeordnet.

Mit einem zweiten Ende 21 ist die Koppelstange 12 an dem zweiten Arm 9 der Abstreiflamelle 6 schwenkbar um die dritte Achse A3 angeordnet. Der zweite Arm 9 der Abstreiflamelle 6 ist bezüglich der verbindenden Geraden G1 auf der rechten Seite, d.h. auf der dem Gurtband 2 abgewandten Seite angeordnet. Damit ist das Koppelungselement 12 mit dem ersten Ende 20 und dem zweiten Ende 21 auf gegenüberliegenden Seiten der verbindenden Geraden G1 an der Abstreiflamelle 6 und an der Federeinrichtung 10 angeordnet. Dadurch ist erreicht, dass das erste Drehgelenk 5 im Uhrzeigersinn und das zweite Drehgelenk 7 gegen den Uhrzeigersinn mit einer Kraft durch das an dem ersten Drehgelenk 5 angeordnete Federelement 11 der Federeinrichtung 10 beaufschlagt ist.

An dem zweiten Arm 9 der Abstreiflamelle 6 ist ein Anschlag 22 vorgesehen, der in der Abstreifposition an der Lamellenstütze 4 anliegt. An dem ersten Arm 8 der Abstreiflamelle 6 ist eine Abstreifkante 23 angeordnet, die einen im wesentlichen rechteckigen Querschnitt mit einer langen und kurzen Seite aufweist. Mit einer langen und einer kurzen Seite ist die Abstreifkante 23 an dem ersten Arm 8 befestigt, zum Beispiel geklebt. Mit der anderen kurzen Seite liegt die Abstreifkante 23 an dem Gurtband 2 an, sodass die Kante zwischen der langen und der kurzen Seite der Abstreifkante 23 die Verunreinigungen von dem Gurtband 2 abschält.

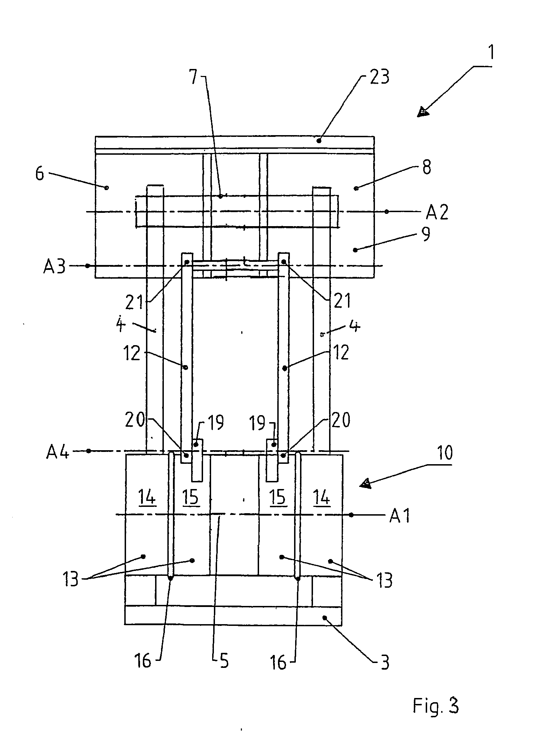

In der in Fig. 3 gezeigten Vorderansicht wird eine weitere symmetrische Vorrichtung zum Abstreifen von Verunreinigungen gezeigt, die nicht eine mittig angeordnete Lamellenstütze 4, sondern 2 spiegelsymetrisch angeordnete Lamellenstützen 4 zeigt. Alle weiteren Elemente sind analog zu Fig. 2.

Die vorstehend beschriebene Vorrichtung zum Abstreifen von Verunreinigungen von Gurtbändern einer Förderbandanlage funktioniert nun wie folgt:

Im Normalbetrieb, d.h. in der Abstreifposition für kleine Verunreinigungen der Vorrichtung 1 weist die Vorrichtung eine Anordnung an dem Gurtband 2 derart auf, dass diese in der so genannten Drei-Uhrposition an dem Gurtband 2 mit der Abstreifkante 23 der Abstreiflamelle 6 anliegt. Dadurch werden kleine Verunreinigungen von dem Gurtband 2 durch die Abstreifkante 23 abgeschält. Durch die gegen den Uhrzeigersinn orientierte Federkraft des Federelements 11 wird die Lamellenstütze 4 und somit auch die Abstreiflamelle 6 entgegen des Gurtbandes 2 gedrückt und gehalten, sodass die Abstreiflamelle 6 nicht durch die Verunreinigungen von dem Gurtband 2 weggedrückt wird, sondern diese von dem Gurtband 2 entfernt werden. Um eine optimale Ausrichtung der Abstreiflamelle 6 an dem Gurtband 2 zu erreichen, ist diese mittels des Koppelungselements 12 über das zweite Gehäuseteil 15 mit der Spiralfeder der Federeinrichtung 10 gekoppelt, sodass das zweite Drehgelenk 7 und damit die Abstreiflamelle 6 im Uhrzeigersinn durch das Federelement 11 vorgespannt ist. Dadurch ist eine Vorspannung der Abstreiflamelle 6 gegeben, die entgegen der Verunreinigungen an dem Gurtband 2 gerichtet ist. Durch den in der Abstreifposition an der Lamellestütze 4 anliegenden Anschlag 22 wird die Abstreiflamelle 6 in dieser Position gehalten.

Treten nun an dem Gurtband Störungen oder Hindernisse wie zum Beispiel ein Gurtbandschaden auf, so wird die Abstreiflamelle 6 und die Lamellenstütze 4 entgegen der Federkraft der Federeinrichtung 10 verschwenkt. Dabei trifft zunächst ein Hindernis auf die Abstreifkante 23 und verschwenkt die Abstreiflamelle 6 gegen den Uhrzeigersinn um die zweite Achse A2 des zweiten Drehgelenks 7, wobei der Anschlag 22 von der Lamellenstütze 4 weggeschwenkt wird. Der zweite Arm 9 der Abstreiflamelle 5 verschwenkt dabei entgegen der Federwirkung des Federelements 11, da der zweite Arm 9 über das Koppelungselement 12 mit dieser gekoppelt ist. Dabei wird die Lamellenstütze 4 um die erste Achse A1 in dem ersten Drehgelenk 5 im Uhrzeigersinn verschwenkt. Durch die überlagerte Verschwenkung um die erste Achse A1 und die zweite Achse A2 wird die Abstreiflamelle 6 von dem Gurtband 2 weggeschwenkt und es wird erreicht, dass die Abstreiflamelle 6 dem Hindernis ausweicht und nicht durch dieses beschädigt wird.

Durch die Federkraft des Federelementes 11 wird die Abstreiflamelle 6 und die Lamellenstütze 4 wieder in Richtung des Gurtbandes 2 zurückgeschwenkt. Dabei wird aufgrund des Federelementes 11 zunächst die Abstreiflamelle 6 wieder im Uhrzeigersinn verschwenkt bis der Anschlag 22 an der Lamellenstütze 4 anliegt. Daraufhin wird die Lamellenstütze 4 um die Achse A1 des ersten horizontalen Drehgelenks 5 bezüglich des Systemträgers 3 verschwenkt, sodass die Abstreifkante 23 wieder an dem Gurtband 2 schälend anliegt, wobei aufgrund des bereits wieder Anliegens des Anschlags 22 an der Lamellenstütze 4 die Abstreiflamelle 6 derart orientiert ist, dass die Abstreifkante 23 mit der glatten Fläche an dem Gurtband 2 zum Liegen kommt und nicht eine Kante der Abstreifkante auf das Gurtband 2 trifft, wodurch dieses beschädigt werden würde. Der Schwenkvorgang der Vorrichtung 1 erfolgt in Sekundenbruchteilen.

Die Erfindung ist vorstehend anhand von zwei Ausführungsbeispielen näher erläutert worden, bei denen das Kopplungselement 12 an dem zweiten Arm 9 der Abstreiflamelle 6 angeordnet ist. Es versteht sich, dass das Koppelungselement 12 ebenso an dem ersten Arm 8 der Abstreiflamelle 6 angeordnet sein kann. Hierbei ist dann zu beachten, dass das Koppelungselement 12 entsprechend mit der Federeinrichtung 10 gekoppelt ist, so dass für das erste und das zweite Drehgelenk 5 und 7 eine entgegen gesetzte Vorspannung gegeben ist.

### Bezugszeichenliste

- 1: Vorrichtung zum Abstreifen
- 2: Gurtband
- 3: Systemträger
- 4: Lamellenstütze
- 5: erstes horizontales Drehgelenk
- 6: Abstreiflamelle
- 7: zweites horizontales Drehgelenk
- 8: erster Arm
- 9: zweiter Arm
- 10: Federeinrichtung
- 11: Federelement
- 12: Koppelungselement
- 13: Gehäuse
- 14: erster Gehäuseteil
- 15: zweiter Gehäuseteil
- 16: O-Ring
- 17: erstes Ende des Federelements 11
- 18: zweites Ende des Federelements 11
- 19: Vorsprung
- 20: erstes Ende des Kopplungselements 12
- 21: zweites Ende des Kopplungselements 12
- 22: Anschlag
- 23: Abstreifkante
- A1: erste Achse
- A2: zweite Achse
- A3: dritte Achse
- A4: vierte Achse
- G1: verbindende Gerade

## Patentansprüche

1. Vorrichtung zum Abstreifen von Verunreinigungen eines Gurtbandes an Förderbandanlagen, umfassend
■ wenigstens eine an einem Systemträger (3) um eine erste Achse (A1) schwenkbar angeordnete Lamellenstütze (4),
■ wenigstens eine an der Lamellenstütze (4) um eine zweite Achse (A2) schwenkbar angeordnete Abstreiflamelle (6), die einen dem Gurtband (2) zugewandten ersten Arm (8) und einen dem Gurtband (2) abgewandten zweiten Arm (9) aufweist, und
■ wenigstens eine der ersten Achse (A1) zugeordnete Federeinrichtung (10) mit wenigstens einem Federelement (11), das die Abstreiflamelle (6) in Richtung des Gurtbandes (2) vorspannt, so dass die Abstreiflamelle (6) in einer Abstreifposition mit dem ersten Arm (8) an dem Gurtband (2) anliegt,
■ wenigstens ein Koppelungselement (12) an einem von dem ersten Arm (8) und dem zweiten Arm (9) der Abstreiflamelle (6) angeordnet ist, das die Abstreiflamelle (6) mit der Federeinrichtung (10) koppelt, wobei
■ der Anlenkpunkt (A4) des Koppelungselementes (12) an der Federeinrichtung (10) über einen Vorsprung (19) erfolgt, der drehbar um Achse (A1) ist, welche gleichzeitig Achse der Lamellenstütze (4) ist, und
■ die Federeinrichtung (10) sowohl mit dem Systemträger (3) als auch mit der Lamellenstütze (4) als auch mit dem Kopplungselement (12) am Drehgelenk (5) verbunden ist,
**dadurch gekennzeichnet, dass**
■ das Koppelungselement (12) um eine Achse (A3) schwenkbar an der Abstreiflamelle (6) angeordnet ist,
und
■ die Lamellenstütze (4) über die Federeinrichtung (10) an das Gurtband (2) gedrückt wird.

2. Vorrichtung nach Anspruch 1, **dadurch gekennzeichnet, dass** ein zweites Koppelungselement (12) vorgesehen ist und die beiden Koppelungselemente (12) parallel zueinander sind.

3. Vorrichtung nach Anspruch 2, **dadurch gekennzeichnet, dass** die beiden Koppelungselemente (12) bezüglich der Lamellenstütze (4) auf gegenüberliegenden Seiten vorgesehen sind.

4. Vorrichtung nach einem der Ansprüche 1 bis 3, **dadurch gekennzeichnet, dass** eine zweite Lamellenstütze (4) vorgesehen ist und die beiden Lamellenstützen (4) parallel zueinander sind.

5. Vorrichtung nach einem der Ansprüche 1 bis 4, **dadurch gekennzeichnet, dass** das wenigstens eine Federelement (11) eine Spiralfeder oder eine Drehfeder umfasst.

6. Vorrichtung nach einem der Ansprüche 1 bis 5, **dadurch gekennzeichnet, dass** die Federeinrichtung (10) ein Gehäuse (13) umfasst, in dem das wenigstens eine Federelement (11) angeordnet ist.

7. Vorrichtung nach Anspruch 6, **dadurch gekennzeichnet, dass** das Gehäuse (13) ein erstes Gehäuseteil (14) und ein zweites Gehäuseteil (15) umfasst, wobei das erste Gehäuseteil (14) dem Systemträger (3) und das zweite Gehäuseteil (15) der Lamellenstütze (4) verbunden ist.

8. Vorrichtung nach Anspruch 7, **dadurch gekennzeichnet, dass** das Koppelungselement (12) an dem zweiten Gehäuseteil (15) angeordnet ist.

9. Vorrichtung nach einem der Ansprüche 7 oder 8, **dadurch gekennzeichnet, dass** das wenigstens eine Federelement (11) eine Spiralfeder umfasst, wobei ein erstes Ende (17) der Spiralfeder an dem ersten Gehäuseteil (14) und ein zweites Ende (18) an dem zweiten Gehäuseteil (15) angeordnet ist.

10. Vorrichtung nach einem der Ansprüche 1 bis 9, **dadurch gekennzeichnet, dass** das wenigstens eine Kopplungselement (12) am zweiten Arm (9) der Abstreiflamelle (6) angeordnet ist.

11. Vorrichtung nach einem der Ansprüche 1 bis 10, **dadurch gekennzeichnet, dass** an dem ersten Arm (8) eine Abstreifkante (23) angeordnet ist.

12. Vorrichtung nach einem der Ansprüche 1 bis 11, **dadurch gekennzeichnet, dass** an dem zweiten Arm (9) ein Anschlag (22), der in der Abstreifposition an der Lamellenstütze (4) anliegt, vorgesehen ist.

13. Vorrichtung nach einem der Ansprüche 1 bis 12, **dadurch gekennzeichnet, dass** die zweite Achse (A2) in dem Verbindungspunkt des ersten und zweiten Arms vorgesehen ist.

14. Vorrichtung nach einem der Ansprüche 1 bis 13, **dadurch gekennzeichnet, dass** die Abstreiflamelle (6) an einem Trägerelement angeordnet ist, wobei das Trägerelement schwenkbar an der Lamellenstütze (4) vorgesehen ist.

## Claims

1. Device for stripping impurities from a belt in conveyor belt systems, comprising
• at least one lamella support (4) arranged on a system carrier (3) such that it can pivot about a first axis (A1),
• at least one stripping lamella (6), which is arranged on the lamella support (4) such that it can pivot about a second axis (A2) and which has a first arm (8) facing the belt (2) and a second a first arm (9) facing away from the belt (2), and
• at least one spring apparatus (10) assigned to the first axis (A1) and having at least one spring element (11), which preloads the stripping lamella (6) in the direction of the belt (2), so that the stripping lamella (6) bears with the first arm (8) on the belt (2) in a stripping position,
• at least one coupling element (12) is arranged on one of the first arm (8) and the second arm (9) of the stripping lamella (6) and couples the stripping lamella (6) to the spring apparatus (10), wherein
• the attachment point (A4) of the coupling element (12) on the spring apparatus (10) is provided via a projection (19) which can rotate about axis (Al) , which at the same time is the axis of the lamella support (4), and
• the spring apparatus (10) is connected both to the system carrier (3) and to the lamella support (4) and also to the coupling element (12) at the rotary joint (5),
**characterized in that**
• the coupling element (12) is arranged on the stripping lamella (6) such that it can pivot about an axis (A3), and
• the lamella support (4) is pressed onto the belt (2) by the spring apparatus (10).

2. Device according to Claim 1, **characterized in that** a second coupling element (12) is provided and the two coupling elements (12) are parallel to each other.

3. Device according to Claim 2, **characterized in that** the two coupling elements (12) are provided on opposite sides with respect to the lamella support (4) .

4. Device according to one of Claims 1 to 3, **characterized in that** a second lamella support (4) is provided and the two lamella supports (4) are parallel to each other.

5. Device according to one of Claims 1 to 4, **characterized in that** the at least one spring element (11) comprises a spiral spring or a torsion spring.

6. Device according to one of Claims 1 to 5, **characterized in that** the spring apparatus (10) comprises a housing (13), in which the at least one spring element (11) is arranged.

7. Device according to Claim 6, **characterized in that** the housing (13) comprises a first housing part (14) and a second housing part (15), the first housing part (14) being connected to the system carrier (3) and the second housing part (15) being connected to the lamella support (4).

8. Device according to Claim 7, **characterized in that** the coupling element (12) is arranged on the second housing part (15).

9. Device according to either of Claims 7 and 8, **characterized in that** the at least one spring element (11) comprises a spiral spring, a first end (17) of the spiral spring being arranged on the first housing part (14) and a second end (18) being arranged on the second housing part (15).

10. Device according to one of Claims 1 to 9, **characterized in that** the at least one coupling element (12) is arranged on the second arm (9) of the stripping lamella (6).

11. Device according to one of Claims 1 to 10, **characterized in that** a stripping edge (23) is arranged on the first arm (8).

12. Device according to one of Claims 1 to 11, **characterized in that** a stop (22), which bears on the lamella support (4) in the stripping position, is provided on the second arm (9).

13. Device according to one of Claims 1 to 12, **characterized in that** the second axis (A2) is provided at the connecting point of the first and second arm.

14. Device according to one of Claims 1 to 13, **characterized in that** the stripping lamella (6) is arranged on a carrier element, the carrier element being provided such that it can pivot on the lamella support (4).

## Revendications

1. Dispositif de raclage d'impuretés d'une bande dans des installations de bandes transporteuses, comprenant :
- au moins un support de lamelle (4) disposé sur un support de système (3) de manière à pouvoir pivoter autour d'un premier axe (A1),
- au moins une lamelle de raclage (6) disposée sur le support de lamelle (4) de manière à pouvoir pivoter autour d'un deuxième axe (A2) , laquelle lamelle de raclage présente un premier bras (8) tourné vers la bande (2) et un deuxième bras (9) opposé à la bande (2), et
- au moins un dispositif à ressort (10) associé au premier axe (A1), comprenant au moins un élément de ressort (11) qui précontraint la lamelle de raclage (6) dans la direction de la bande (2) de sorte que la lamelle de raclage (6) s'applique dans une position de raclage avec le premier bras (8) contre la bande (2),
- au moins un élément d'accouplement (12) disposé sur l'un du premier bras (8) et du deuxième bras (9) de la lamelle de raclage (6), lequel élément d'accouplement accouple la lamelle de raclage (6) au dispositif à ressort (10),
- le point d'articulation (A4) de l'élément d'accouplement (12) au dispositif à ressort (10) se produisant par le biais d'une saillie (19) qui peut tourner autour de l'axe (A1) qui constitue en même temps l'axe du support de lamelle (4), et
- le dispositif à ressort (10) étant connecté à la fois au support de système (3) ainsi qu'au support de lamelle (4) et à l'élément d'accouplement (12) au niveau de l'articulation pivotante (5),
**caractérisé en ce que**
- l'élément d'accouplement (12) est disposé sur la lamelle de raclage (6) de manière à pouvoir tourner autour d'un axe (A3), et
- le support de lamelle (4) est pressé par le biais du dispositif à ressort (10) contre la bande (2).

2. Dispositif selon la revendication 1, **caractérisé en ce qu'**un deuxième élément d'accouplement (12) est prévu, et les deux éléments d'accouplement (12) sont parallèles l'un à l'autre.

3. Dispositif selon la revendication 2, **caractérisé en ce que** les deux éléments d'accouplement (12) sont prévus sur des côtés opposés par rapport au support de lamelle (4).

4. Dispositif selon l'une quelconque des revendications 1 à 3, **caractérisé en ce qu'**un deuxième support de lamelle (4) est prévu et les deux supports de lamelle (4) sont parallèles l'un à l'autre.

5. Dispositif selon l'une quelconque des revendications 1 à 4, **caractérisé en ce que** l'au moins un élément de ressort (11) comprend un ressort spirale ou un ressort de torsion.

6. Dispositif selon l'une quelconque des revendications 1 à 5, **caractérisé en ce que** le dispositif à ressort (10) comprend un boîtier (13) dans lequel est disposé l'au moins un élément de ressort (11).

7. Dispositif selon la revendication 6, **caractérisé en ce que** le boîtier (13) comprend une première partie de boîtier (14) et une deuxième partie de boîtier (15), la première partie de boîtier (14) étant connectée au support de système (3) et la deuxième partie de boîtier (15) au support de lamelle (4).

8. Dispositif selon la revendication 7, **caractérisé en ce que** l'élément d'accouplement (12) est disposé sur la deuxième partie de boîtier (15).

9. Dispositif selon l'une quelconque des revendications 7 ou 8, **caractérisé en ce que** l'au moins un élément de ressort (11) comprend un ressort spirale, une première extrémité (17) du ressort spirale étant disposée sur la première partie de boîtier (14) et une deuxième extrémité (18) étant disposée sur la deuxième partie de boîtier (15).

10. Dispositif selon l'une quelconque des revendications 1 à 9, **caractérisé en ce que** l'au moins un élément d'accouplement (12) est disposé sur le deuxième bras (9) de la lamelle de raclage (6) .

11. Dispositif selon l'une quelconque des revendications 1 à 10, **caractérisé en ce qu'**une arête de raclage (23) est disposée sur le premier bras (8).

12. Dispositif selon l'une quelconque des revendications 1 à 11, **caractérisé en ce qu'**une butée (22), qui s'applique dans la position de raclage contre le support de lamelle (4), est prévue sur le deuxième bras (9).

13. Dispositif selon l'une quelconque des revendications 1 à 12, **caractérisé en ce que** le deuxième axe (A2) est prévu au point de connexion entre le premier et le deuxième bras.

14. Dispositif selon l'une quelconque des revendications 1 à 13, **caractérisé en ce que** la lamelle de raclage (6) est disposée sur un élément de support, l'élément de support pouvant pivoter sur le support de lamelle (4).
